# DEMANDE DE BREVET EUROPEEN

(11) **EP 2 110 783 A1**
(43) Date de publication de la demande: **21.10.2009**
(21) Numéro de dépôt: 09157366.7
(22) Date de dépôt: 06.04.2009
(51) Int. Cl.: G06Q 30/00

(54) **Système et procédé de sélection d'un message apte á être délivré á un utilisateur de services de télécommunications**

(30) Priorité: 15.04.2008 FR 0852523
(71) Demandeur: Alcatel Lucent, 75008 Paris (FR)
(72) Inventeur: Bertoni, Yves, 91620, NOZAY (FR); Betge Brezetz, Stéphane, 91620, NOZAY (FR); Senot, Christophe, 91620, NOZAY (FR); Aghasaryan, Armen, 91620, NOZAY (FR)
(74) Mandataire: Hedarchet, Stéphane

(57) **Abrégé**

La présente invention a pour objet un système (100) de sélection d'un message apte à être délivré à un utilisateur (111) de services de télécommunications. Ce système (100) comporte une première base de données (107) incluant une pluralité d'états caractéristiques dudit utilisateur (111), chaque état occupant une place déterminée dans une suite d'états possibles, et des transitions entre les différents états, une deuxième base de données (108) incluant une pluralité de messages aptes à être diffusés au dit utilisateur (111) et une troisième base de données (104) incorporant un historique de messages déjà diffusés au dit utilisateur (111). Le système (100) comporte en outre un calculateur (101) comportant des moyens (112) pour détecter une transition et déterminer l'état courant dudit utilisateur (111) en fonction des données fournies par ladite troisième base de données (104), des moyens (113) pour associer ledit état courant à un message inclus dans ladite deuxième base de données et des moyens (103 ; 115 ; 114) pour déterminer l'instant de diffusion dudit message vers ledit utilisateur (111).

## Description

La présente invention concerne un système et un procédé de sélection d'un message apte à être délivré à un utilisateur de services de télécommunications. L'invention est plus particulièrement adaptée à la mise en oeuvre de campagne publicitaire permettant la diffusion de message représentatif d'une marque ou d'un produit.

La question du suivi des audiences ciblées par les publicitaires devient de plus en plus complexe lors de la mise en oeuvre de campagnes destinées à promouvoir des marques ou des produits.

Cette difficulté est encore accrue du fait de la multiplication des services multimédias et des dispositifs permettant leur diffusion (téléphone mobile, assistant numérique personnel, ordinateur personnel, télévision...).

Dans ce contexte, la présente invention a pour but de palier ces difficultés et vise à fournir un système de sélection d'un message apte à être délivré à un utilisateur de services de télécommunications et permettant de prendre en compte automatiquement l'évolution du comportement de cet utilisateur et de lui délivrer automatiquement un message adapté à l'évolution de son comportement.

A cette fin, l'invention propose un système de sélection d'un message apte à être délivré à un utilisateur de services de télécommunications, ledit système comportant :
- une première base de données incluant :
   o une pluralité d'états caractéristiques dudit utilisateur, chaque état occupant une place déterminée dans une suite d'états possibles ;
   o les transitions possibles entre les différents états ;
- une deuxième base de données incluant une pluralité de messages aptes à être diffusés au dit utilisateur;
- une troisième base de données incorporant un historique de messages déjà diffusés au dit utilisateur ;
- un calculateur comportant des moyens pour détecter une transition et déterminer l'état courant dudit utilisateur en fonction des données fournies par ladite troisième base de données ;
- des moyens pour associer ledit état courant à un message inclus dans ladite deuxième base de données ;
- des moyens pour déterminer l'instant de diffusion dudit message vers ledit utilisateur.

Grâce à l'invention, on définit un état caractéristique de l'utilisateur occupant une certaine place parmi une suite d'états possibles, cet état permettant de suivre l'évolution de l'utilisateur en termes de niveau de sensibilité et d'exposition à différents messages déjà diffusés concernant un produit ou une marque donnée. Le calculateur met à jour cet état à partir d'informations provenant d'au moins une base de données contenant les différentes expositions de l'utilisateur à des messages relatifs au produit ou à la marque (ladite base de données mémorise par exemple un identifiant des messages publicitaires déjà envoyés, la date de l'envoi de ces messages et ses destinataires ainsi que le nombre de fois où les destinataires ont été exposés à un même message).. Le calculateur utilise pour cela un graphe d'états incluant les transitions d'un état à l'autre.

Dès lors, le système effectue une mise en correspondance entre l'état courant et le message à diffuser adapté à cet état : cette mise en concordance permet une sélection automatique du message adapté à l'état de maturité de l'utilisateur.

Ce faisant, une fois le bon message sélectionné, il convient de le diffuser au moment ad hoc. Le système selon l'invention comporte pour cela des moyens permettant de déterminer automatiquement l'instant de diffusion dudit message.

Le système selon l'invention est donc un outil permettant de suivre et d'estimer le positionnement des consommateurs par rapport à des marques ou des produits puis de coupler ce positionnement avec la sélection publicitaire et de permettre la diffusion de cette sélection publicitaire au moment approprié.

Ce système constitue une solution multimédia dans la mesure où il peut fonctionner avec différentes plateformes utilisant des canaux différents (diffusion de programmes de télévision à destination de terminaux mobiles, diffusion de programmes de télévision par Internet, diffusion de vidéo à destination de terminaux mobiles,...). Le système permet non seulement de rassembler des informations concernant les différents messages auxquels l'utilisateur a été exposé sur les différents canaux mais également de diffuser le message sélectionné sur un canal spécifique à un instant choisi.

Le système selon l'invention peut également présenter une ou plusieurs des caractéristiques ci-dessous, considérées individuellement ou selon toutes les combinaisons techniquement possibles:
- ladite troisième base comporte :
   o une liste des messages déjà diffusés,
   o la date de diffusion de ces messages ;
   o les destinataires des messages déjà diffusés ;
   o le nombre de fois où lesdits destinataires ont été exposés à un même message ;
- le système selon l'invention comporte une base de données, dite base de profilage, incluant des données de profilage dudit utilisateur, lesdits moyens pour détecter une transition et déterminer l'état courant dudit utilisateur utilisant les données comprises dans ladite base de profilage pour détecter ladite transition et déterminer ledit état courant ;
- le système selon l'invention comporte une base de données, dite base d'interactivité, incluant des données relatives à l'interactivité entre ledit utilisateur et des messages déjà sélectionnés par ledit système et diffusés à l'utilisateur, lesdits moyens pour détecter une transition et déterminer l'état courant dudit utilisateur utilisant les données comprises dans ladite base d'interactivité pour détecter ladite transition et déterminer ledit état courant ;
- lesdits moyens pour déterminer l'instant de diffusion dudit message vers ledit utilisateur sont des moyens qui déterminent un intervalle de temps pendant lequel ledit message peut être diffusé à l'utilisateur alors qu'un service est en cours de diffusion vers ledit utilisateur ;
- lesdits moyens pour déterminer l'instant de diffusion dudit message vers ledit utilisateur sont des moyens comportant un compteur temporel permettant de déclencher la diffusion dudit message après un temps prédéterminé ;
- lesdits moyens pour déterminer l'instant de diffusion dudit message vers ledit utilisateur sont des moyens déclenchant la diffusion dudit message en fonction d'une condition prédéfinie qui doit être remplie ;
- lesdits moyens pour déterminer l'instant de diffusion dudit message vers ledit utilisateur incorporent des moyens de sélection du canal de diffusion approprié dudit message ;
- le système selon l'invention comporte une interface pour configurer :
   o ladite première base de données en définissant lesdits états caractéristiques de l'utilisateur pour une marque ou une catégorie de produit ou un produit donné ainsi que les transitions entre les différents états ;
   o ladite deuxième base de données en définissant les messages au regard de ladite marque ou de ladite catégorie de produit ou dudit produit donné associé aux dits états de ladite première base de donnée ;
- le système selon l'invention comporte un module d'interface utilisateur permettant une communication d'information entre ledit utilisateur et ledit calculateur de sorte que ledit utilisateur transmet au dit calculateur une information qui sera prise en considération dans la détermination de l'état courant par lesdits moyens pour détecter une transition et déterminer l'état courant dudit utilisateur.

La présente invention a également pour objet un réseau comportant un système selon l'invention interfacé avec au moins une plateforme de délivrance de services vers des terminaux de communication.

La présente invention a par ailleurs pour objet un procédé de sélection d'un message apte à être délivré à un utilisateur de services de télécommunications, ledit procédé comportant les étapes suivantes mises en oeuvre par ordinateur:
- détection d'une transition entre un premier état et un deuxième état en fonction des données relatives à l'historique de messages déjà diffusés au dit utilisateur, lesdits premier et deuxième état occupant une place différente dans une suite d'états caractéristiques dudit utilisateur, ledit deuxième état devenant l'état courant dudit utilisateur ;
- association dudit état courant à un message sélectionné parmi une pluralité de messages aptes à être diffusés au dit utilisateur ;
- détermination de l'instant de diffusion dudit message vers ledit utilisateur.

D'autres caractéristiques et avantages de l'invention ressortiront clairement de la description qui en est donnée ci-dessous, à titre indicatif et nullement limitatif, en référence aux figures annexées, parmi lesquelles :
- la figure 1 est une représentation schématique du système selon l'invention;
- la figure 2 illustre un exemple d'arbre de décision utilisé par le système selon l'invention;

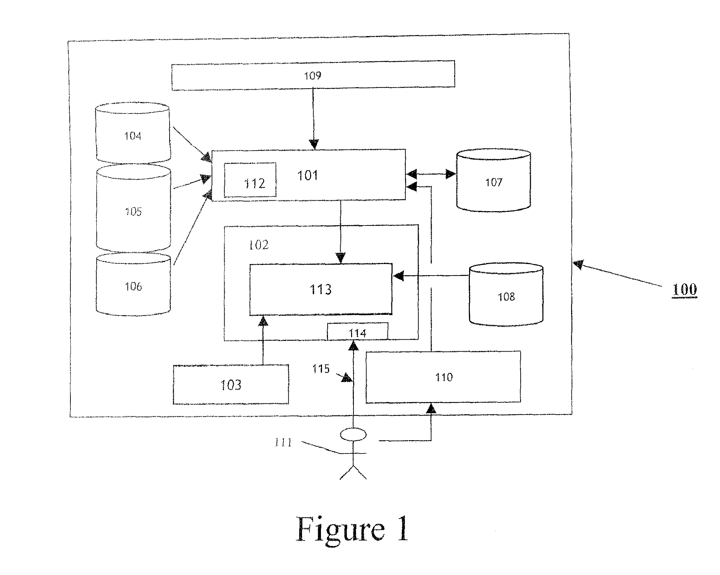

La figure 1 illustre schématiquement un système 100 de sélection d'un message apte à être délivré à un utilisateur 111 de services de télécommunications.

Le système 100 comporte une première base de données 107 incluant :
o une pluralité d'états caractéristiques de l'utilisateur pour un produit ou une marque donnée, chaque état occupant une place déterminée dans une suite d'états possibles;
o des transitions entre les différents états.

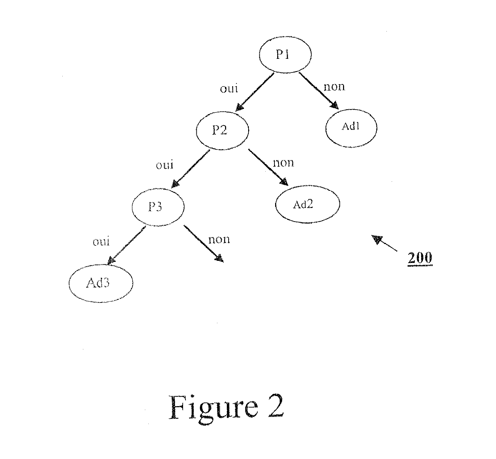

Le modèle définissant les états ainsi que les transitions entre états peut être par exemple un arbre de décision, un graphe probabiliste du type réseau Bayésien ou un moteur de règles du type système expert. Un exemple d'arbre de décision 200 sera décrit plus tard en référence à la figure 2. Chaque état est significatif du positionnement d'un utilisateur au regard d'une marque donnée, d'un produit donné, d'une catégorie de produit donnée ou d'un domaine de consommation pour une société particulière.

Le système 100 comporte en outre une deuxième base de données 108 incluant une pluralité de messages publicitaires ou créations. On notera que ces messages sont des messages multimédias: en d'autres termes, ces messages peuvent être diffusés en utilisant différentes plateformes de délivrance de services utilisant des canaux différents (diffusion de programmes de télévision à destination de terminaux mobiles, diffusion de programmes de télévision par Internet, diffusion de vidéo à destination de terminaux mobiles,...). Ces plateformes de délivrance de services non représentées sont interfacées avec le système 100 de façon à être en mesure de diffuser les messages publicitaires. Cet ensemble de messages publicitaires forme une campagne publicitaire destinée à être diffusée, au bon moment, à un public ciblé. Comme pour les états, les messages sont représentatifs d'une marque donnée, d'un produit donné, d'une catégorie de produit donnée ou d'un domaine de consommation pour une société particulière, chacun de ces messages étant destiné à un public cible particulier.

On trouvera ci-dessous un exemple d'une telle campagne concernant la publicité d'un nouveau produit et comportant plusieurs messages Ad1 à Ad3 ciblés pour une audience spécifique :
- Message Ad1 dédié aux personnes ignorant tout d'un nouveau produit ;
- Message Ad2 dédié aux personnes informées de l'existence de ce nouveau produit ;
- Message Ad3 dédié aux personnes intéressées par le nouveau produit.

Le système 100 selon l'invention comporte par ailleurs :
- un calculateur 101 ;
- une troisième base de données 104 ;
- une quatrième base de données 105 ;
- une cinquième base de données 106.

Les troisième, quatrième et cinquième bases de données 104, 105 et 106 fournissent les entrées du calculateur 101. Le calculateur 101 comporte des moyens 112 pour mettre à jour l'état d'un utilisateur en détectant des transitions entre les états contenus dans la première base de données 107.

La troisième base de données 104 incorpore un historique de messages déjà diffusés aux utilisateurs. Comme nous l'avons déjà mentionné auparavant, le système 100 selon l'invention permet la sélection de messages publicitaires qui sont diffusés vers un utilisateur en fonction de la place qu'occupe ce dernier dans un processus de maturation. Le système 100 mémorise dans la troisième base de données 104 la mesure de l'exposition de l'utilisateur aux différents messages déjà diffusées ; en d'autres termes, la troisième base 104 mémorise un identifiant des messages publicitaires déjà envoyés, la date de l'envoi de ces messages et ses destinataires ainsi que le nombre de fois où les destinataires ont été exposés à un même message. Bien entendu, la troisième base de données 104 mémorise les messages déjà proposés à la diffusion vers les différents dispositifs multimédias de l'utilisateur de façon à obtenir une information aussi précise que possible sur l'évolution de cet utilisateur.

La quatrième base de données 105 est une base de données comportant des données de profilage des utilisateurs construites à partir de données collectées qui caractérisent le profil de l'utilisateur (personnalités, habitudes, âges, sexes, centres d'intérêts, caractéristiques de leurs terminaux telles que l'interface graphique) et d'une modélisation de l'utilisateur. Cette quatrième base de données est par exemple interfacée avec un moteur de profilage non représenté et permettant la génération desdites données de profilage. Ce moteur de profilage peut fonctionner dans un environnement multiplateforme (i.e. plusieurs plateformes de délivrance de services accessibles à un même utilisateur) de façon à générer des données de profilage prenant en compte des données d'utilisateur agrégées provenant des différentes plateformes.

La cinquième base de données 106 inclut des données concernant l'interactivité entre l'utilisateur et les messages déjà diffusés à l'utilisateur via une sélection du système selon l'invention 100. Cette interactivité peut prendre différentes formes. Il peut s'agir par exemple d'une adresse url activé par l'utilisateur ou d'un clic de l'utilisateur dans un contenu proposé ; il peut également s'agir d'une utilisation d'un code court ou « short code » envoyé sous forme de SMS (« Short Message Service ») et permettant à l'utilisateur d'indiquer son appréciation ou son intérêt relatif à un produit.

Les moyens 112 de mise à jour de l'état d'un utilisateur à partir des différents états et des transitions entre ces états définis dans la première base de données 107 utilisent les données fournies par les troisième, quatrième et cinquième bases de données 104, 105 et 106 pour déterminer l'état d'un utilisateur.

Le système selon l'invention 100 comporte par ailleurs des moyens 102 de sélection d'un message apte à être délivré vers un utilisateur. Les moyens 102 de sélection comportent des moyens 113 de mise en concordance ou « mapping » de l'état courant déterminé par les moyens de mise à jour 112 avec au moins un des messages Ad1 à Ad3 tels que définis plus haut et inclus dans la deuxième base de données 108. Ainsi à chaque changement d'état, les moyens 113 de mapping associent automatiquement un nouveau message au nouvel état. Il est possible que l'état corresponde à plusieurs messages ; dans ce cas, le système 100 selon l'invention devra comprendre des moyens d'optimisation permettant de choisir entre plusieurs messages.

Le système 100 incorpore également des moyens pour déterminer automatiquement l'instant de diffusion dudit message vers ledit utilisateur : ces moyens de détermination peuvent être de deux types.

Il peut tout d'abord s'agir de moyens 114 interfacés avec les services diffusés à l'utilisateur 111 (la flèche 115 illustre cet interfaçage); les moyens 114 déterminent un intervalle de temps (ou « time slot » en anglais) pendant lequel le message peut être diffusé alors qu'un service est diffusé. L'utilisateur 111 regarde par exemple la télévision et les moyens 114 déterminent l'intervalle pendant lequel il est possible d'envoyer une publicité via une coupure ou un pop-up par exemple. On notera que l'adéquation entre le contenu du service visualisé par l'utilisateur et le message peut également être prise en compte (par exemple, le contenu d'un pop-up diffusé peut être adapté au sujet de la vidéo regardée par l'utilisateur).

Il peut également s'agir de moyens 103 de déclenchement fonctionnant hors du contexte de l'utilisation d'un service par l'utilisateur. Les moyens 103 comportent alors un compteur temporel permettant de déclencher la diffusion du message après un temps prédéterminé suivant le changement d'état. Selon une autre alternative, les moyens 103 de déclenchement peuvent déclencher la diffusion du message en fonction d'une condition prédéfinie qui doit être remplie : par exemple, les moyens 103 déclenchent la diffusion d'un message publicitaire sur une nouvelle marque de parapluie en fonction des conditions météorologiques (en cas de pluie par exemple). La diffusion du message suite au déclenchement provoqué par les moyens 103 de déclenchement peut se faire par sollicitation directe de l'utilisateur en choisissant un canal approprié : mail, sms,... Les moyens 103 peuvent donc également incorporer des moyens de sélection du canal de diffusion approprié dudit message.

Le système 100 selon l'invention comporte par ailleurs une interface de configuration 109 permettant, par exemple à un publicitaire souhaitant mettre en place une campagne de publicité ou à un agent logiciel en charge de cette mise en place, de configurer :
- la première base de données 107 en définissant les états caractéristiques de l'utilisateur pour un produit ou une marque donnée ainsi que les transitions entre les différents états ;
- la deuxième base de données 108 en définissant les créations au regard d'une marque ou d'un produit donné associées aux états de la première base de donnée 107.

Le système 100 selon l'invention inclut également un module d'interface utilisateur 110 permettant une communication d'information de l'utilisateur 111 au calculateur 101 : ce module 110 permet notamment à l'utilisateur 111 d'indiquer lui-même au calculateur 101 une information relative à son état de maturité, information qui sera prise en considération dans la détermination de l'état courant par les moyens de mise à jour 112.

Un exemple d'arbre de décision 200 est représenté en figure 2 dans le cas de la campagne publicitaire comportant les messages Ad1 à Ad3 définis plus haut. L'arbre 200 comporte trois noeuds correspondant chacun à un prédicat P1 à P3:
- P1 est le prédicat : « l'utilisateur connaît le nouveau produit » ;
- P2 est le prédicat : « l'utilisateur s'intéresse au nouveau produit » ;
- P3 est le prédicat : « l'utilisateur est prêt à acquérir le nouveau produit ».

Dès lors, on peut définir quatre états pour l'utilisateur qui sont dans l'ordre de transition :
- Etat 1 : l'utilisateur ne connaît pas le nouveau produit ;
- Etat 2 : l'utilisateur connaît le nouveau produit ;
- Etat 3 : l'utilisateur s'intéresse au nouveau produit ;
- Etat 4 ; l'utilisateur est prêt à acquérir le nouveau produit.

A titre d'exemple, la règle de transition de l'état 1 à l'état 2 correspond à la réponse « oui » du prédicat P1 : elle peut par exemple être déclenchée par le fait que l'utilisateur a été exposé à un nombre suffisant de messages publicitaires relatifs au nouveau produit : l'utilisateur a progressé dans son processus de maturation. Cette information d'exposition est fournie aux moyens 112 de mise à jour de l'état par la troisième base de données 104 qui permet de prendre en compte le niveau de maturité de l'utilisateur. La transition de l'état 1 à l'état 2 peut également être déclenchée à l'aide d'informations provenant de la quatrième base de données 105 de profilage (le profil de l'utilisateur indique par exemple un intérêt potentiel pour la technologie associée au produit).

La règle de transition de l'état 2 à l'état 3 correspond à la réponse « oui » du prédicat P2 : elle peut par exemple être déclenchée par une visualisation d'un message publicitaire dans sa globalité et/ou par l'envoi d'un message texte et/ou par au moins un clic dans un contenu en réponse à une question du type « appréciez-vous le produit ». Ces informations sont fournies aux moyens 112 de mise à jour de l'état par la cinquième base de données 106 qui permet de prendre en compte l'interactivité de l'utilisateur avec les messages qui lui sont diffusés.

La règle de transition de l'état 2 à l'état 3 correspond à la réponse « oui » du prédicat P2 : elle peut être déclenchée par un clic dans un contenu de demande d'informations sur le produit (il s'agit à nouveau d'une information contenue dans la cinquième base de données 106).

Au début de la campagne publicitaire, tous les utilisateurs ont un état courant qui est initialisé à l'état 1.

L'ensemble des moyens fonctionnels décrits en référence à la figure 1 sont des moyens logiciels mis en oeuvre par ordinateur.

Bien entendu, l'invention n'est pas limitée au mode de réalisation qui vient d'être décrit.

Notamment, les moyens représentés sur la figure 1 sont des unités fonctionnelles qui peuvent ou non correspondre à des unités distinguables. Par exemple, ces moyens peuvent être regroupés dans un unique composant logiciel. A contrario, certains moyens peuvent éventuellement être composés d'entités logicielles séparées.

Par ailleurs, la première base de données peut inclure plusieurs suites d'états (ainsi que les transitions entre ces états pour chaque suite), chaque suite correspondant à une marque donnée, un produit donné, une catégorie de produit donnée ou un domaine de consommation pour une société particulière.

## Revendications

1. Système (100) de sélection d'un message apte à être délivré à un utilisateur (111) de services de télécommunications, ledit système (100) étant **caractérisé en ce qu'**il comporte :
- une première base de données (107) incluant :
o une pluralité d'états caractéristiques dudit utilisateur (111), chaque état occupant une place déterminée dans une suite d'états possibles;
o des transitions entre les différents états ;
- une deuxième base de données (108) incluant une pluralité de messages aptes à être diffusés au dit utilisateur (111);
- une troisième base de données (104) incorporant un historique de messages déjà diffusés au dit utilisateur (111);
- un calculateur (101) comportant des moyens (112) pour détecter une transition et déterminer l'état courant dudit utilisateur (111) en fonction des données fournies par ladite troisième base de données (104);
- des moyens (113) pour associer ledit état courant à un message inclus dans ladite deuxième base de données ;
- des moyens (103 ; 115 ; 114) pour déterminer l'instant de diffusion dudit message vers ledit utilisateur (111).

2. Système (100) selon la revendication 1 **caractérisé en ce que** ladite troisième base (104) comporte :
- une liste des messages déjà diffusés,
- la date de diffusion de ces messages ;
- les destinataires des messages déjà diffusés ;
- le nombre de fois où lesdits destinataires ont été exposés à un même message.

3. Système (100) selon l'une des revendications précédentes **caractérisé en ce qu'**il comporte une base de données (105), dite base de profilage, incluant des données de profilage dudit utilisateur (111), lesdits moyens (112) pour détecter une transition et déterminer l'état courant dudit utilisateur (111) utilisant les données comprises dans ladite base de profilage (105) pour détecter ladite transition et déterminer ledit état courant.

4. Système (100) selon l'une des revendications précédentes **caractérisé en ce qu'**il comporte une base de données (106), dite base d'interactivité, incluant des données relatives à l'interactivité entre ledit utilisateur (111) et des messages déjà sélectionnés par ledit système (100) et diffusés à l'utilisateur (111), lesdits moyens (112) pour détecter une transition et déterminer l'état courant dudit utilisateur (111) utilisant les données comprises dans ladite base d'interactivité (106) pour détecter ladite transition et déterminer ledit état courant

5. Système (100) selon l'une des revendications précédentes **caractérisé en ce que** lesdits moyens pour déterminer l'instant de diffusion dudit message vers ledit utilisateur (111) sont des moyens (114) qui déterminent un intervalle de temps pendant lequel ledit message peut être diffusé à l'utilisateur alors qu'un service est en cours de diffusion vers ledit utilisateur.

6. Système (100) selon l'une des revendications 1 à 4 **caractérisé en ce que** lesdits moyens pour déterminer l'instant de diffusion dudit message vers ledit utilisateur sont des moyens (103) comportant un compteur temporel permettant de déclencher la diffusion dudit message après un temps prédéterminé

7. Système (100) selon l'une des revendications 1 à 4 **caractérisé en ce que** lesdits moyens pour déterminer l'instant de diffusion dudit message vers ledit utilisateur sont des moyens (103) déclenchant la diffusion dudit message en fonction d'une condition prédéfinie qui doit être remplie.

8. Système (100) selon l'une des revendications 6 ou 7 **caractérisé en ce que** lesdits moyens (103 ; 115 ; 114) pour déterminer l'instant de diffusion dudit message vers ledit utilisateur incorporent des moyens de sélection du canal de diffusion approprié dudit message.

9. Système (100) selon l'une des revendications précédentes comportant une interface (109) pour configurer :
- ladite première base de données (107) en définissant lesdits états caractéristiques de l'utilisateur pour une marque ou une catégorie de produit ou un produit donné ainsi que les transitions entre les différents états ;
- ladite deuxième base de données (108) en définissant les messages au regard de ladite marque ou de ladite catégorie de produit ou dudit produit donné associé aux dits états de ladite première base de donnée (107).

10. Système (100) selon l'une des revendications précédentes comportant un module d'interface utilisateur (110) permettant une communication d'information entre ledit utilisateur (111) et ledit calculateur (101) de sorte que ledit utilisateur (111) transmet au dit calculateur (101) une information qui sera prise en considération dans la détermination de l'état courant par lesdits moyens (112) pour détecter une transition et déterminer l'état courant dudit utilisateur (111).

11. Réseau comportant un système selon l'une des revendications précédentes interfacé avec au moins une plateforme de délivrance de services vers des terminaux de communication.

12. Procédé de sélection d'un message apte à être délivré à un utilisateur de services de télécommunications, ledit procédé comportant les étapes suivantes mises en oeuvre par ordinateur:
- détection d'une transition entre un premier état et un deuxième état en fonction des données relatives à l'historique de messages déjà diffusés au dit utilisateur, lesdits premier et deuxième état occupant une place différente dans une suite d'états caractéristiques dudit utilisateur, ledit deuxième état devenant l'état courant dudit utilisateur ;
- association dudit état courant à un message sélectionné parmi une pluralité de messages aptes à être diffusés au dit utilisateur ;
- détermination de l'instant de diffusion dudit message vers ledit utilisateur.
